# EUROPÄISCHE PATENTSCHRIFT

(11) **EP 3 598 955 B1**
(45) Veröffentlichungstag und Bekanntmachung des Hinweises auf die Patenterteilung: **14.04.2021**
(21) Anmeldenummer: 18185450.6
(22) Anmeldetag: 25.07.2018
(51) Int. Cl.: A61C 17/22, A61C 17/32, A61C 17/34, A46B 13/02

(54) **SILIKONHÜLLE FÜR EINE VIBRATIONSZAHNREINIGUNGSVORRICHTUNG UND HERSTELLUNGSVERFAHREN DIESER**
SILICONE COVER FOR A VIBRATION TOOTH CLEANING DEVICE AND METHODS FOR THE MANUFACTURE OF SUCH A DEVICE
COUVERTURE EN SILICONE POUR UN DISPOSITIF DE NETTOYAGE DENTAIRE VIBRANT ET SON PROCÉDÉ DE FABRICATION

(43) Veröffentlichungstag der Anmeldung: 29.01.2020
(73) Patentinhaber: BLBR GmbH, 82031 Grünwald (DE)
(72) Erfinder: KEINER, Michael, 35619 Braunfels (DE)
(74) Vertreter: Becker & Kurig Partnerschaft Patentanwälte PartmbB

(56) Entgegenhaltungen:
- US-A1- 2014 272 761
- US-A1- 2018 184 795

## Beschreibung

### Technisches Gebiet

Die vorliegende Erfindung betrifft eine Silikonhülle für eine Vibrationszahnreinigungsvorrichtung, ein Herstellungsverfahren für die Silikonhülle, ein Mundstück mit der Silikonhülle und eine Vibrationszahnreinigungsvorrichtung mit dem Mundstück. Insbesondere betrifft die Erfindung eine Silikonhülle für eine Vibrationszahnreinigungsvorrichtung, die die gleichzeitige Reinigung mehrerer, bevorzugt aller Zähne eines Benutzers ermöglicht, und ein entsprechendes Herstellungsverfahren.

### Beschreibung des Standes der Technik

Das Putzen der Zähne ist die Basis der Individualprophylaxe zur Zahnerhaltung. Primäre Ziele sind die Entfernung bakterieller Plaques (Karies, Parodontitis) und die Entfernung von Speiseresten und Fremdkörpern. Sekundäre Ziele sind die Fluoridapplikation über Zahncremes zur Erhöhung der Widerstandskraft der Zähne, insbesondere des Zahnschmelzes gegen saure Stoffwechselprodukte der Bakterien im Mundraum.

Das verbreitetste und auch billigste Modell ist die mit der Hand geführte Kurzkopfzahnbürste. Einige Bereiche im Mund sind durch einen kleinen Bürstenkopf besser erreichbar, weshalb hochwertige Handzahnbürsten oft über einen kurzen Kopf, mittelharte bis weiche Kunststoffborsten mit abgerundeten Borstenenden und einen ergonomischen Handgriff verfügen, der eine sichere Führung erlaubt.

Eine weitere verbreitete Art der Zahnreinigung ist die Verwendung einer oszillierendrotierende Zahnbürste, die sich durch einen runden rotierenden bzw. oszillierenden Bürstenkopf auszeichnet. Das Funktionsprinzip ist einem Zahnpoliturwerkzeug ähnlich. Die Reinigungsleistung von oszillierend-rotierenden Bürstenköpfen ist nach einer Studie in einem geringen Maße besser als diejenige von Handzahnbürsten.

Als Weiterentwicklung der elektrischen Zahnbürste gilt die elektronische Schallzahnbürste. Bei dieser wird der Bürstenkopf mit einer höheren Frequenz als bei herkömmlichen elektrischen Zahnbürsten bewegt, meist mit einer Frequenz von 250 bis 300 Hertz.

Eine neuere Weiterentwicklung ist die Ultraschallzahnbürste, die Schwingungsfrequenzen oberhalb 300 Hertz nutzt. Ultraschallzahnbürsten erreichen bis zu 1,8 Mio. Schwingungen pro Sekunde (1,8 MHz). Derartige Geräte arbeiten mit einem Tupfer, der Flüssigkeit im Mund in Schwingungen versetzt und mithilfe einer speziellen Zahnpasta erzeugte Schaumblasen zum Platzen bringt. Durch dieses Zerplatzen wird die Reinigungsleistung erreicht. Ultraschallzahnpasta enthält keinen Putzkörper und arbeitet somit nicht mehr mechanisch.

Allen obigen Zahnreinigungsverfahren gleich ist, dass die eigentliche Reinigungstätigkeit der Zahnflächen manuell durch den Anwender erfolgen muss. Unabhängig davon, welche Form der Zahnreinigung gewählt wird, muss der Benutzer einen nur einige Millimeter großen Bürstenkopf in verschiedenen Techniken über die jeweilige Zahnoberfläche führen. Dabei kommen verschiedenste Hinweise zum Einsatz, wie die sinnvolle Ausführung der Putzbewegung (kreisend, streichend) zu gestalten ist. Um ein normales menschliches Gebiss sorgfältig zu reinigen, werden 2,5 bis 3 Minuten ausschließliche Reinigungstätigkeit benötigt.

Der manuelle Putzvorgang durch den Anwender ist jedoch mit gravierenden Mängeln behaftet:
- Bei einer manuellen Reinigung besteht immer die Gefahr, dass einige Zähne oder Zahnflächen vergessen werden.
- Der Anwender kann zu viel oder zu wenig Druck mit dem Bürstenkopf ausüben.
- Durch unsachgemäße Techniken können Speisereste oder Zahnbeläge in den Zwischenraum zwischen Zahnfleisch und Zahn gelangen und dort Probleme verursachen.
- Zahnbürstenköpfe werden grundsätzlich ohne besonderen Hygieneschutz aufbewahrt, so dass sie ein Reservoir für Krankheitsüberträger darstellen können.
- Die manuelle Zahnreinigung nimmt mit 2,5 bis 3 Minuten zweimal täglich zu viel Zeit in Anspruch.

Um diese Nachteile abzumindern, sollte der Vorgang der Zahnreinigung so weit wie möglich automatisiert und individuell an Form und Größe der Zähne und des Kiefers des Anwenders angepasst werden. Insbesondere ist eine schnelle, anwendungssichere und gründliche Zahnreinigungstechnik wünschenswert, was in den vergangenen Jahren zur Entwicklung von Zahnreinigungssystemen für das gesamte Gebiss eines Benutzers geführt hat.

Die Patentanmeldung DE 102015109891 A1, die von den Erfindern der vorliegenden Anmeldung entwickelt wurde, offenbart eine solche Zahnputzvorrichtung für die gleichzeitige Reinigung mehrerer, vorzugsweise aller Zähne eines Benutzers. Hier wird ein Mundeinsatz über eine Kupplung mit einem Vibrationsmotor verbunden, der die Zahnputzvorrichtung in Vibration versetzt.

Die DE 102015109891 A1 beschreibt auch ein Herstellungsverfahren, bei dem zunächst ein Scan der Gebissstruktur, die Transformation der gescannten Daten in eine Konstruktionsdatei und die anschließende Produktion im 3D Druck, vorzugsweise mittels eines Lasersinter-Verfahrens erfolgt. Diese Produktionstechnik der Mundeinsätze ist sehr aufwendig und zudem auch fehleranfällig. Zunächst muss ein Scan des Gebisses mit einem Intraoralscanner erfolgen, was ein zeit- und kostenintensives Verfahren ist. Im nächsten Schritt wird ein 3D-Gebissmodell aus den Scandaten generiert, auf dessen Grundlage eine Konstruktionsdatei für die Mundeinsätze erstellt wird. Zuletzt werden die Mundeinsätze im 3D-Druckverfahren produziert. Jeder Fehler im Scan wird dabei durch den gesamten Produktionsprozess übertragen.

Zudem offenbart die US 2014/0272761 A1 eine kieferorthopädische Regulierungsvorrichtung, bei der die Bissplatte so modifiziert ist, dass sie texturierte, den Zähnen und dem Zahnfleisch zugewandte Oberflächen aufweist, um bei der Anwendung einen Reinigungs-, Massage- oder Akupressur-Effekt zu erzielen.

Die US 2018/0184795 A1 wiederrum offenbart ein Zahnpflegegerät, das für einen bestimmten Benutzer angepasst ist und eine Trägerplatte mit einen ersten Abschnitt, der so konfiguriert ist, dass er in einen Mund eingeführt werden kann und einen Befestigungsmechanismus, der so konfiguriert ist, dass er die Zahnpflegevorrichtung an einer Antriebsbaugruppe befestigt und einen Elastomer-Abschnitt umfasst, der den ersten Abschnitt der Platte umschließt, wobei der Elastomer-Abschnitt eine Vielzahl von Reinigungsspitzen umfasst und entsprechend den Gebissdetails des jeweiligen Benutzers geformt ist.

Die obigen Mängel im Stand der Technik werden durch die Struktur einer Silikonhülle und die Konstruktion eines Mundstücks mit dieser gemäß der vorliegenden Erfindung behoben, wobei ein individuell an den Benutzer angepasstes, vollautomatisches Zahnreinigungsgeräts erhalten wird. Chemische, kinetische und mechanische Reinigungseigenschaften sollen sich derart ergänzen, dass ein nahezu optimales Reinigungs- und Pflegeergebnis sowohl der Zähne, als auch des Zahnfleischs erzielt wird. Das Herstellungsverfahren der vorliegenden Erfindung soll sich zudem zur preisgünstigen Herstellung großer Stückzahlen eignen. Fertigungsfehler sollen durch die Herstellung weitestgehend eliminiert werden.

### Zusammenfassung der Erfindung

Die vorliegende Erfindung wird durch die beigefügten Ansprüche bereitgestellt. Die nun folgende Offenbarung von bevorzugten Ausführungsformen dient dem erleichterten Verständnis der vorliegenden Erfindung. Entsprechend wird durch die vorliegende Offenbarung eine Silikonhülle für ein Mundstück einer Vibrationszahnputzvorrichtung für die gleichzeitige Reinigung mehrerer, vorzugsweise aller Zähne eines Benutzers bereitgestellt. Die Silikonhülle umfasst einen Oberkieferabschnitt und einen Unterkieferabschnitt. Der Oberkieferabschnitt und der Unterkieferabschnitt entsprechen jeweils einem Negativabdruck eines Ober- oder Unterkiefers eines menschlichen Gebisses und sind jeweils während einer Benutzung der Vibrationszahnputzvorrichtung an innere und äußere Zahnflanken und, im Bereich der Seitenzähne, zusätzlich an Kauflächen des Ober- oder Unterkiefers des Benutzers angepasst. Die Silikonhülle weist am Ober- und Unterkieferabschnitt Reinigungsstrukturen auf, die die Zähne des Ober- oder Unterkiefers an den Zahnflanken und Kauflächen während des Betriebs berühren. Die Silikonhülle umfasst in einem Querschnitt senkrecht zu den Zahnflanken entsprechenden Flächen des Ober- und Unterkieferabschnitts im Bereich des Ober- und Unterkieferabschnitts jeweils eine M-Form, wobei die inneren Flanken der M-Form jeweils den Ober- und Unterkieferabschnitt bilden und die unteren Enden der äußeren Flanken der M-Form des Unterkieferabschnitts an entsprechenden unteren Enden von äußeren Flanken der M-Form des Oberkieferabschnitts befestigt sind.

Die Anpassung an das Gebiss des Benutzers erfolgt durch eine grobe Abschätzung, bevorzugt durch einen Zahnarzt oder über eine Bissschablone, die eine grobe Einordnung im Heimbereich durch den Benutzer selbst ermöglicht. Der Erfinder hat festgestellt, dass bereits eine relativ geringe Anzahl von etwa drei Silikonhüllen- bzw. Mundstückgrundgrößen (auch einer Halterung der Silikonhülle) für 95% der erwachsenen Bevölkerung eine ausreichende Anpassung gewährleistet. Somit wird die Herstellung und Anpassung der Silikonhüllen- bzw. Mundstücke erleichtert.

Die Reinigungsstrukturen der Silikonhülle können in einer Ausführungsform der Offenbarung Gummierungsschichten, die auf den Innenflächen der Silikonhülle im Bereich des Oberkieferabschnitts und des Unterkieferabschnitts angebracht sind, Reinigungselemente, die einstückig mit der Silikonhülle ausgebildet sind und/oder Streifenbürsten, die an dem Oberkieferabschnitt und dem Unterkieferabschnitt der Silikonhülle angebracht sind, umfassen. Beispiele und genauere Beschreibungen der Reinigungsstrukturen sowie deren Implementierung sind in der DE 102015109891 A1, Fig. 4 und [0050] beschrieben. So können (mit Bezug auf Fig. 4 der DE 102015109891 A1, wobei diese Figur hierin unter Bezugnahme aufgenommen ist) die Reinigungsstrukturen in Form von Reinigungselementen vorgesehen sein.

In der vorliegenden Offenbarung sind insbesondere Reinigungselemente bevorzugt, die einstückig mit der Silikonhülle gebildet sind. Die Reinigungsstrukturen erstrecken sich bevorzugt im Wesentlichen senkrecht von der Oberfläche des Oberkieferabschnitts und des Unterkieferabschnitts der Silikonhülle. Im Bereich der Kauflächen und der vorderen und hinteren Zahnflächen sind in einer Ausführungsform jeweils mit der Hülle einstückige lamellen- oder zylinderförmige Reinigungselemente oder kurze Borsten vorgesehen. Die Reinigungsstrukturen/Borsten im Bereich der Kauflächen können kürzer und/oder dicker sein, das die an den Zahnflanken. Im Grenzbereich zwischen Zahn und Zahnfleisch sind dünnere Reinigungsstrukturen/Borsten bevorzugt, um Verletzungen des Zahnfleischs vorzubeugen. Eine besonders bevorzugte Ausführungsform sieht lamellenförmige Reinigungsstrukturen, so genannte Längslamellen, vor, die im Bereich der Zahnflanken senkrecht, also parallel zu den Zahnzwischenräumen des Benutzers, angeordnet sind. Die Bereiche der Kauflächen sind bevorzugt borsten- oder noppenförmig. Zudem nimmt die Länge der Längslamellen, also deren Erstreckung von der Silikonhülle zum Zahn hin, von den Schneidezähnen zu den hinteren Seitenzähnen zu. Die Länge der Längslamellen kann im Bereich der Zahnzwischenräume länger sein. Vorzugsweise haben die Reinigungsstrukturen eine Länge von 0,1 mm bis 2 mm und eine Dicke von 0,5 bis 2mm.

Es sei angemerkt, dass der Ausdruck "M-Form" im Zusammenhang der vorliegenden Offenbarung als grobe Angabe zu Verbindungspunkten der Silikonflächen zu verstehen ist und nicht als absolute Angabe zu Winkeln zwischen den Flächen oder Ausrichtung der Flächen. Die Flächen der M-Form können beispielsweise konkav/konvex gekrümmt, gewellt oder gerade sein. Das Tal in der Mitte der "M-Form" kann wie beim Buchstaben V-förmig spitz zulaufen, etwa im Bereich der Schneide und Eckzähne. Im Bereich der Seitenzähne sind hingegen Trog-förmige Querschnitte der Mitte der "M-Form" bevorzugt, die gerundete Ecken, Halbkreisform, oder nahezu rechtwinklige Ecken aufweisen können. Dem Fachmann ist es ein Leichtes, die Querschnitte entsprechend der Zahnform der jeweiligen Position des Oberkieferabschnitts und des Unterkieferabschnitts der Silikonhülle anzupassen. Generell sollte die Anpassung ein gewisses Spiel vorsehen (bevorzugt 0,1 bis 1,8mm), um Verletzung oder zu starke Abnutzung der Silikonoberflächen zu verhindern und Platz für die Reinigungsarbeit der Reinigungsstrukturen zu lassen.

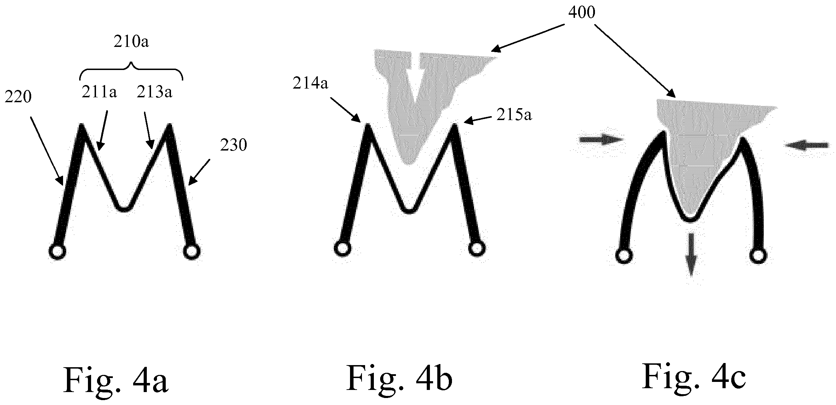

Durch die M-Form des Querschnitts der Silikonhülle der vorliegenden Ausführungsform wird eine verbesserte Anpassung an die individuelle Zahn- bzw. Gebissform des Benutzers erreicht. Nimmt der Benutzer ein Mundstück, das die Silikonhülle der Ausführungsform umfasst, vor der Benutzung in den Mund, drückt er seine Zähne in einer Art Bissbewegung in den Ober- bzw. Unterkieferabschnitt der Silikonhülle. Durch die M-Form hat die untere Fläche des Ober- bzw. Unterkieferabschnitts ein gewisses Spiel in Bissrichtung und folgt der Bissbewegung des Benutzers eine gewisse Strecke, bevorzugt etwa 1 bis 4 mm. Durch den entstehenden Materialmangel im Bereich der proximalen Grate der des Ober- bzw. Unterkieferabschnitts (d.h. der zwei oberen "Spitzen" der "M-Form"), werden diese Grate nach innen in Richtung des Zahns gezogen, was den Kontakt der Silikonhülle mit dem Zahn und somit die Reinigungswirkung der Vorrichtung verbessert. Der Effekt wird später mit Bezug auf Fig. 4 genauer erklärt.

In einer bevorzugten Ausführungsform des Mundstücks der Offenbarung ist ein Raum zwischen den äußeren und inneren Flanken der M-Form des Querschnitts im Bereich des Ober- und Unterkieferabschnitts mit einem Material aufgefüllt. Das Material kann ein anderes Silikonmaterial als das der Silikonhülle, ein Silikonschaum, ein Fluid oder ein Gel sein. Durch die Füllung kann der oben beschriebene Effekt des Andrückens der Grate der Silikonhülle an das Gebiss des Benutzers verstärkt werden, da ein Zusammensinken der Silikonhülle durch den Gegendrück des Füllmaterials verhindert wird.

Optional kann zwischen dem Boden des Troges, der durch die inneren Flanken in dem M-förmigen Querschnitt gebildet wird, und einer Halterung eines Mundstücks, das die Silikonhülle der Ausführungsform umfasst, ein Hohlraum ausgebildet werden, um das Einsinken des Zahns in die Silikonhülle zu erleichtern. Als Füllmaterial kommen in dieser Ausführungsform feste und flexible Stoffe in Frage.

In einer bevorzugten Ausführungsform des Mundstücks der Offenbarung ist die Silikonhülle einstückig ausgebildet. Besonders bevorzugt ist das Herstellen der Silikonhülle mittels Vakuumspritzguss. Besonders bevorzugt sind auch die Reinigungsstrukturen einstückig mit der Silikonhülle im Vakuumspritzguss gefertigt.

Das Vakuumspritzgussverfahren ist eine besonders kosteneffektive Methode zur Herstellung der Silikonhülle. Die Halterung und deren Kopplungs- bzw. Verbindungsabschnitte können ebenfalls im Vakuumspritzguss hergestellt sein. Alternative Herstellungsverfahren umfassen 3D-Druck- oder 3D-Sinterverfahren.

In einer bevorzugten Ausführungsform des Mundstücks der Offenbarung umfasst die Silikonhülle eine Silikonzusammensetzung, die eine Shore-A-Härte bei 23°C im Bereich von 20 bis 30 Shore-A, bevorzugt im Bereich von 22 bis 25 Shore-A (DIN ISO 7619-1, siehe Abschnitt "Messverfahren") aufweist. Die Silikonzusammensetzung kann zudem auch Additive, Farbstoffe, und Verstärkungsstoffe (z.B. Fasern aus härteren Silikonzusammensetzungen) enthalten. In einer Ausführungsform ist die Silikonhülle vollständig aus einer solchen Silikonzusammensetzung gefertigt.

Die Dicke der inneren Flanken der M-Form der Silikonhülle können zusätzlich oder alternativ dazu dem 0,5- bis 0,8-fachen der Dicke der äußeren Flanken der jeweiligen M-Form entsprechen. Die Dicke der äußeren Flanken kann absolut in einer Ausführungsform 1,2 bis 2,5 mm, bevorzugt 1,4 bis 1,8 mm betragen und die Dicke der inneren Flanken 1,0 bis 2,0 mm, bevorzugt 1,2 bis 1,6 mm betragen. Diese Wandstärken sind jedoch nur als Richtwerte zu verstehen und sollten nicht zur Begrenzung der vorliegenden Erfindung ausgelegt werden. Die oben angegebenen Wandstärken haben sich in Testverfahren bei Vibrationsfrequenzen von 100 Hz bis 500 Hz bewährt. Jedoch könnten andere Frequenzen oder stärkere Motoren höhere Wandstärken erlauben. Umgekehrt könnten mit besonders widerstandsfähigen oder härteren als hier angegebenen Silikonzusammensetzungen geringere Wandstärken erreicht werden.

In einer bevorzugten Ausführungsform der Offenbarung wird ein Mundstück für eine Vibrationszahnputzvorrichtung für die gleichzeitige Reinigung mehrerer, vorzugsweise aller Zähne eines Benutzers bereitgestellt, das eine Halterung und eine Silikonhülle umfasst, die die Halterung im Wesentlichen vollständig umgibt. Die Halterung erstreckt sich bevorzugt im Wesentlichen durch die gesamte Silikonhülle, stützt diese und dient der Schwingungsübertragung. Die Silikonhülle entspricht dabei einer Silikonhülle gemäß der obigen Offenbarung.

Durch die Silikonhülle, die die Halterung nahezu vollständig umgibt, weist das Mundstück eine hygienisch einwandfreie Oberfläche auf, passt sich gut an die Zahnkonturen des Benutzers an und kann einfach und schnell nach der Benutzung gereinigt werden. Die Kombination aus Halterung, die eine relativ starre Grundstruktur bereitstellt, und der Silikonhülle, werden die Schwingungen eines angeschlossenen Vibrationsmotors gleichmäßig bis in den Bereich der hinteren Backenzähne übertragen.

In einer bevorzugten Ausführungsform des Mundstücks der Offenbarung umfasst die Halterung eine Oberkieferhalterung und eine Unterkieferhalterung. Die Silikonhülle kann in dieser Ausführungsform die Oberkieferhalterung und die Unterkieferhalterung, abgesehen von einem Verbindungsabschnitt der Halterung mit einem Vibrationsmotor, vollständig umgeben.

Durch die getrennte Stützung der Silikonhülle durch die Oberkieferhalterung und die Unterkieferhalterung kann das Vibrationsverhalten im Bereich der hinteren Backenzähne weiter verbessert werden. Zudem wird eine relative Bewegung von Oberkiefer und Unterkiefer zueinander ermöglicht, was den Kontakt zu Zähnen und Zahnfleisch des Benutzers verbessert und eine Beschädigung des Mundstücks durch zu festes Zubeißen verhindern kann. Der Abstand zwischen Ober- und Unterkieferhalterung verstärkt zudem den oben beschriebenen Effekt der M-Form im Querschnitt der Silikonhülle, da durch den Abstand für die Silikonhülle zusätzliches Spiel bereitgestellt wird.

Optional kann in diesen Ausführungsformen des Mundstücks der mittlere Bereich des M-förmigen Querschnitts des Ober- und Unterkieferabschnitts eine Trog-Form aufweisen, wobei ein Boden des Troges an der Halterung befestigt ist.

In dieser Ausführungsform wird das oben beschriebene Spiel der unteren Fläche des Ober- bzw. Unterkieferabschnitts der Silikonhülle nicht relativ zur Halterung bereitgestellt, sondern ausschließlich durch die Relativbewegung der voneinander beabstandeten (bevorzugt etwa 2 bis 8 mm) Ober- und Unterkieferhalterung zueinander. Diese Ausführungsform erhöht die Stabilität und somit die Reinigungswirkung der unteren Fläche des Ober- bzw. Unterkieferabschnitts, also der Flächen, die zur Reinigung der Kauflächen der Seitenzähne vorgesehen sind, die aufgrund ihrer Oberflächenstruktur und Härte eine besonders intensive Reinigung bedürfen und vertragen.

In einer bevorzugten Ausführungsform des Mundstücks der Offenbarung sind die äußeren Flanken des M-förmigen Querschnitts an über einen zusätzlichen Steg der Silikonhülle, eine Einkerbung in der Silikonhülle und/oder einen Knick der Silikonhülle in der außen- oder inneren Flanken der M-Form an dem Außenrand der Halterung abgestützt.

Diese Stützung kann Punktweise in regelmäßigen Abständen entlang dem Außenrand der Halterung oder als über den Gesamten oder Teile des Umfangs der Halterung vorgesehen sein. Diese zusätzliche Halterungsvarianten unterstützen die Stützwirkung der Außenflanken der M-Form, da die zusätzlichen Stege an der relativ starren Halterung befestigt sind und nicht an dem relativ weichen Gegenstück, d.h. der M-Form des jeweils anderen Kieferabschnitts.

In einer bevorzugten Ausführungsform des Mundstücks der Offenbarung ist die Halterung aus Homo- oder Copolyamid, bevorzugt lebensmittelechtem Homo- oder Copolyamid, weiterhin bevorzugt aus PA 6, PA, 6.6, PA 4.6, PA 11, PA 12, PA 1010, PA 610, Copolyamiden oder Polyamidmischungen aus diesen und besonders bevorzugt PA 11, PA 12, Copolyamiden oder Polyamidmischungen aus diesen gefertigt.

In einer bevorzugten Ausführungsform des Mundstücks der Offenbarung sind die Oberkieferhalterung und die Unterkieferhalterung im Bereich vor den Schneidezähnen über einen Federabschnitt miteinander verbunden und ist der Federabschnitt mit einem Kopplungsabschnitt verbunden, der zur Kopplung mit einem Vibrationsmotor angepasst ist.

Die Federabschnitte, die zwischen dem Kopplungsabschnitt und der Oberkieferhalterung und der Unterkieferhalterung verlaufen, verbessern die Vibrationsübertragung zum hinteren Bereich der Oberkieferhalterung und der Unterkieferhalterung und verbessern somit die Reinigungswirkung des Mundstücks im Bereich der Seitenzähne.

Die vorliegende Offenbarung stellt zudem eine Vibrationszahnputzvorrichtung für die gleichzeitige Reinigung mehrerer, vorzugsweise aller Zähne eines Benutzers bereit. Die Vibrationszahnputzvorrichtung umfasst ein Mundstück gemäß einer der vorstehend beschriebenen Ausführungsformen und einen Vibrationsmotor, der lösbar mit dem Mundstück verbunden ist, bevorzugt über eine Steckverbindung.

Der Vibrationsmotor erzeugt eine Schwingung von 100 Hz bis 500 Hz, bevorzugt 200 Hz bis 350 Hz, die über den Kopplungsabschnitt an das Mundstück übertragen wird. In diesen Frequenzbereichen wird ein gutes Reinigungsergebnis bei relativ geringer Dauer (etwa 10 bis 30 Sekunden) erreicht.

Die vorliegende Offenbarung stellt zudem ein Verfahren zur Herstellung einer Silikonhülle für eine Vibrationszahnputzvorrichtung für die gleichzeitige Reinigung mehrerer, vorzugsweise aller Zähne eines Benutzers bereit. Das Verfahren umfasst das Bereitstellen einer Negativform für den Vakuumspritzguss und Fertigen einer Silikonhülle mittels Vakuumspritzguss unter Verwendung der Negativform. Die Silikonhülle entspricht dabei im Wesentlichen einer der oben beschriebenen Ausführungsformen der Offenbarung. Insbesondere weist die Silikonhülle einen Oberkieferabschnitt und einen Unterkieferabschnitt auf, die jeweils einem Negativabdruck eines Ober- oder Unterkiefers eines menschlichen Gebisses entsprechen und jeweils während einer Benutzung des Mundstücks an innere und äußere Zahnflanken und, im Bereich der Seitenzähne, an Kauflächen des Ober- oder Unterkiefers des Benutzers angepasst sind.

Die Silikonhülle weist zudem am Ober- und Unterkieferabschnitt Reinigungsstrukturen auf, die die Zähne des Ober- oder Unterkiefers an den Zahnflanken und Kauflächen berühren. Das Vakuumspritzgussverfahren ist zur kosteneffektiven Herstellung der Silikonhülle mit den obigen Eigenschaften besonders geeignet.

In dem Verfahren zur Herstellung einer Silikonhülle umfasst die Silikonhülle in einem Querschnitt senkrecht zu den Zahnflanken entsprechenden Flächen des Ober- und Unterkieferabschnitts im Bereich des Ober- und Unterkieferabschnitts jeweils eine M-Form, wobei die inneren Flanken der M-Form des Unterkieferabschnitts den Gebissabschnitt bilden und die unteren Enden der äußeren Flanken der M-Form an entsprechenden unteren Enden von äußeren Flanken der M-Form des Oberkieferabschnitts befestigt sind.

Die vorliegende Offenbarung stellt zudem ein Verfahren zur Herstellung eines Mundstücks für eine Vibrationszahnputzvorrichtung für die gleichzeitige Reinigung mehrerer, vorzugsweise aller Zähne eines Benutzers bereit. Das Verfahren umfasst dabei ein Herstellungsverfahren für eine Silikonhülle gemäß der obigen Beschreibung, das Bereitstellen einer Halterung und das Ziehen der oben beschriebenen Silikonhülle über die Halterung. Die Ausbildung und Eigenschaften der Halterung wurden oben im Zusammenhang mit dem Mundstück der Offenbarung beschrieben und werden hier nicht wiederholt. Insbesondere ist die Halterung jedoch zweiteilig mit Ober- und Unterkieferhalterung ausgebildet.

Die Silikonhülle weist zur Verbindung der Halterung mit einem Vibrationsmotor eine Öffnung auf, durch die im zusammengebauten Zustand der Kopplungsabschnitt der Halterung hervorsteht. Durch die Flexibilität der Silikonhülle kann diese Öffnung während der Montage des Mundstücks so ausgeweitet werden, dass die Halterung hindurchpasst, ohne Silikonhülle oder Halterung zu beschädigen. Der Montagevorgang kann gegebenenfalls auch automatisiert in einer Fertigungsanlage oder durch den Benutzer zuhause erfolgen, z.B. zum Ersetzen einer defekten oder abgenutzten Silikonhülle.

### Kurze Beschreibung der Zeichnungen

Fig. 1 ist eine Perspektivansicht eines Mundstücks mit Silikonhülle gemäß einer Ausführungsform der vorliegenden Offenbarung.
Fig. 2 ist eine Draufsicht der Oberseite (des Oberkieferabschnitts) eines Mundstücks mit Silikonhülle gemäß einer Ausführungsform der vorliegenden Offenbarung.
Fig. 3 ist eine Querschnittsansicht durch ein Mundstück mit Silikonhülle gemäß einer Ausführungsform der vorliegenden Offenbarung entlang der Schnittlinie "A" in Fig. 2.
Fig. 4a-4c sind schematische Diagramme, die ein Einsinken eines Zahns eines Benutzers vor der Benutzung einer Silikonhülle in einer Querschnittsansicht zeigen.
Fig. 5 ist eine Perspektivansicht einer Halterung eines Mundstücks gemäß einer Ausführungsform der vorliegenden Offenbarung.
Fig. 6 ist eine Querschnittsansicht durch ein Mundstück gemäß einer Ausführungsform der vorliegenden Offenbarung entlang der Schnittlinie "B" in Fig. 2.
Fig. 7 ist eine Querschnittsansicht durch ein Mundstück gemäß einer Ausführungsform der vorliegenden Offenbarung entlang der Schnittlinie "C" in Fig. 2.

### Ausführliche Beschreibung der bevorzugten Ausführungsformen

Im Folgenden wird die vorliegende Offenbarung anhand von Figuren beschrieben, die schematisch verschiedene beispielhafte Ausführungsformen zeigen. Die in den Figuren dargestellten Ausführungsformen sind nicht zwangsläufig maßstabgerecht dargestellt und es können zum Teil Abmessungen gewählt sein, die das Prinzip der vorliegenden Erfindung klarer zur Geltung bringen. Es werden sowohl in der Zeichnung als auch in der Beschreibung gleiche oder ähnliche Bezugszeichen für gleiche oder ähnliche Elemente und Komponenten verwendet. Alle gezeigten und beschriebenen Ausführungsformen sind untereinander ganz oder teilweise kombinierbar, sofern nicht explizit etwas anderes angegeben ist.

Eine Silikonhülle 200 gemäß der vorliegenden Offenbarung umfasst an den Flächen, die im Betrieb mit den Zähnen eines Benutzers in Kontakt kommen, Reinigungsstrukturen in Form von Borsten oder Noppen mit runden, rautenförmigen oder sonstig polygonalem Querschnitt. Der Übersichtlichkeit halber sind diese in den Zeichnungen nicht explizit dargestellt, sollten jedoch in den bevorzugten Ausführungsformen der Erfindung umfasst sein. Grafische beispielhafte Darstellungen sind z.B. in Fig. 4 der DE 102015109891 A1 mit entsprechender Beschreibung (gleicher Erfinder) gezeigt, die hiermit unter Bezugnahme mit aufgenommen sind.

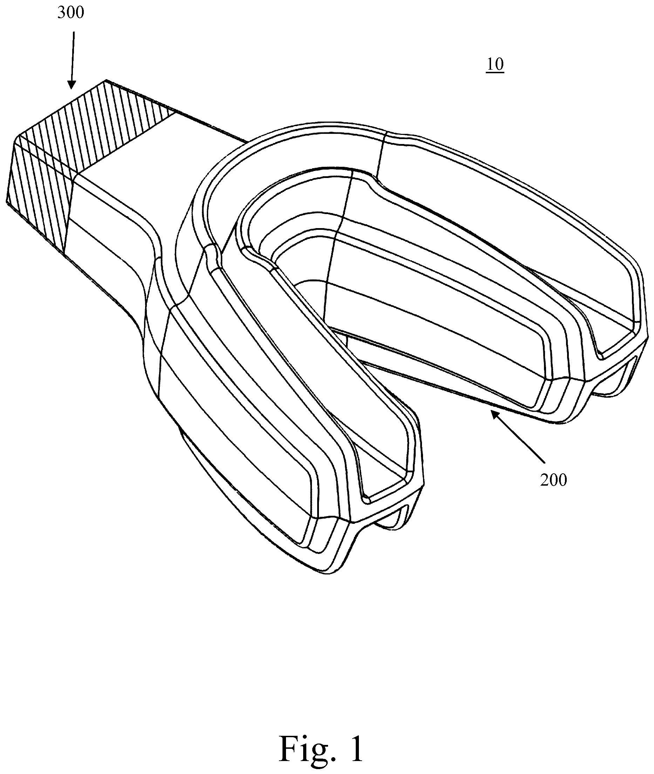

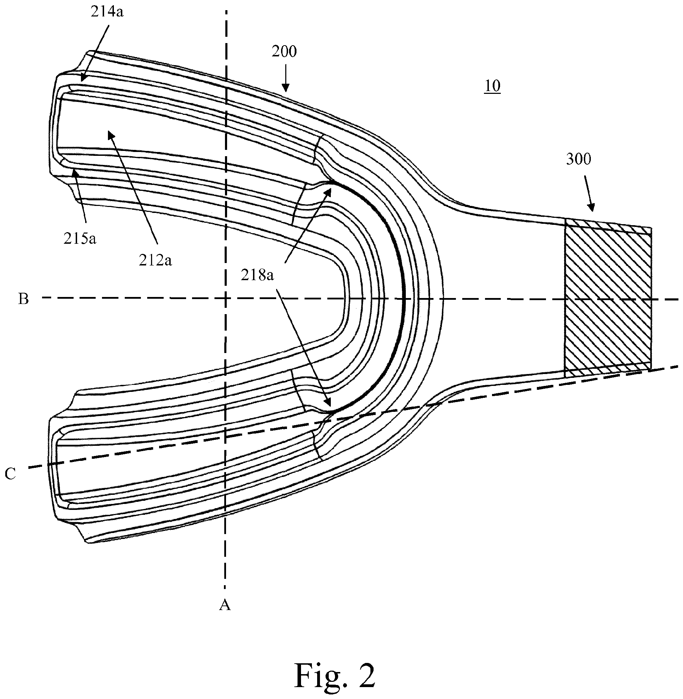

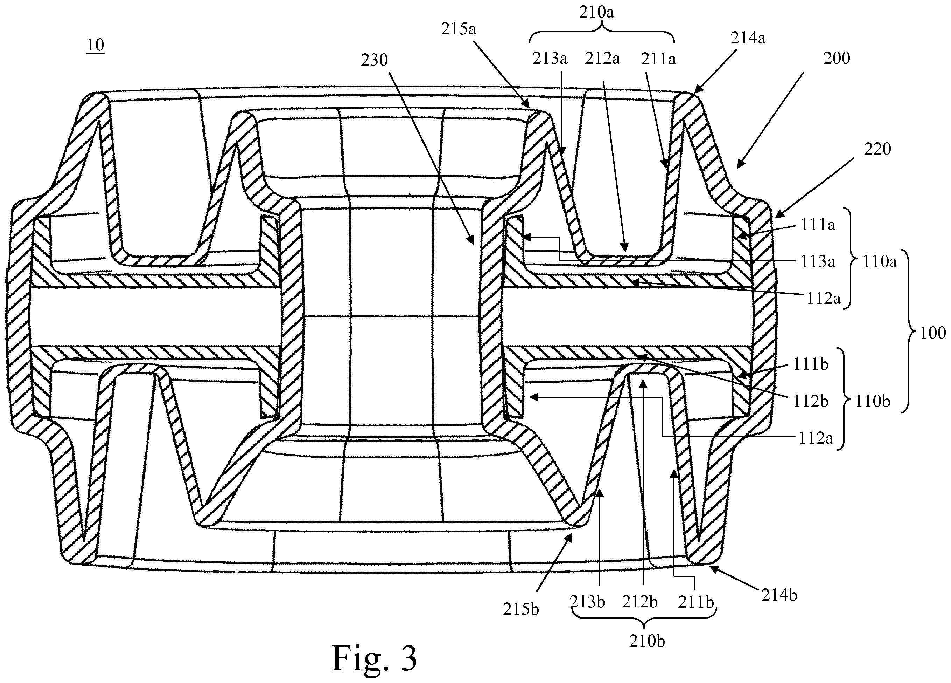

Fig. 1 ist eine Perspektivansicht eines Mundstücks 10 gemäß einer Ausführungsform der vorliegenden Offenbarung. Fig. 2 ist eine Draufsicht der Oberseite (des Oberkieferabschnitts) eines Mundstücks 10 gemäß einer Ausführungsform der vorliegenden Offenbarung. Ein Querschnitt entlang der Schnittlinie A der Fig. 2 ist in Fig. 3 gezeigt. Mit Bezug auf Fig. 1 - 3 stellt die vorliegende Offenbarung ein Mundstück 10 für eine Vibrationszahnputzvorrichtung für die gleichzeitige Reinigung mehrerer, vorzugsweise aller Zähne eines Benutzers, bereit. Das Mundstück 10 der vorliegenden Ausführungsform umfasst eine Halterung 100 und eine Silikonhülle 200, die über die Halterung 100 gezogen ist und diese annähernd vollständig umgibt. Lediglich ein Teil eines Kopplungsabschnitts 300 des Mundstücks 10 ist von der Silikonhülle freigelegt, um eine Kopplung, z.B. über Einstecken, mit einem Vibrationsmotor (nicht gezeigt) zu ermöglichen. In den Querschnittszeichnungen 3, 6, und 7 sind die Halterung 100 von "links oben nach rechts unten" und die Silikonhülle 200 von "links unten nach rechts oben" schraffiert.

Die Silikonhülle 200 umfasst einen Oberkieferabschnitt 210a und einen Unterkieferabschnitt 210b, die jeweils einem Negativabdruck eines Ober- oder Unterkiefers eines menschlichen Gebisses entsprechen und jeweils während einer Benutzung des Mundstücks 10 an innere und äußere Zahnflanken und, im Bereich der Seitenzähne, an Kauflächen des Ober- oder Unterkiefers des Benutzers angepasst sind. Oberkieferabschnitt 210a und Unterkieferabschnitt 210b sind im Wesentlichen symmetrisch aufgebaut, abgesehen davon, dass der Oberkieferabschnitt 210a aufgrund der etwas größeren Zähne des Oberkiefers des menschlichen Gebisses größere Abmessungen und Abstände aufweist, wie auch in den Zeichnungen angedeutet ist. Die folgende Beschreibung ist entsprechend der Symmetrie vereinfacht aufgebaut.

Oberkieferabschnitt 210a und Unterkieferabschnitt 210b sind entsprechend im Bereich der Seitenzähne näherungsweise durch drei Wände, also die Außenwand 211a/211b, den Trogboden 212a/212b und die Innenwand213a/213b des Oberkiefer/Unterkieferabschnitts, gebildet. Im Bereich der Eck- bzw. Schneidezähne sind Oberkieferabschnitt 210a und Unterkieferabschnitt 210b näherungsweise V-förmig durch zwei Wände, also die Außenwand 211a/211b und die Innenwand213a/213b des Oberkiefer/Unterkieferabschnitts gebildet. Der Übergang zwischen Bereich der Seitenzähne und der Eck- bzw. Schneidezähne ist in Fig. 2 durch Übergangspunkt 218a angedeutet.

Anders ausgedrückt, weist der Querschnitt senkrecht zu den Zahnflanken entsprechenden Flächen 211a-213a bzw. 211b-213b des Ober- und Unterkieferabschnitts im Bereich des Ober- und Unterkieferabschnitts jeweils eine M-Form auf, wobei die Mitte der M-Form im Bereich der Seitenzähne Trog-förmig und im Bereich der Eck- und Schneidezähne V-förmig. Die Außenflanken der M-Form des Ober- und Unterkieferabschnitts werden durch den entsprechenden oberen/unteren Teil einer Außenwand 220 der Silikonhülle 200 und den entsprechenden oberen/unteren Teil einer Innenwand 230 der Silikonhülle 200 gebildet. Die Außenwand 211a/211b des Oberkiefer/Unterkieferabschnitts ist durch einen Außengrat 214a/b mit der Außenwand 220 der Silikonhülle 200 verbunden. Entsprechend ist die Innenwand 213a/213b des Oberkiefer/Unterkieferabschnitts durch einen Innengrat 215a/b mit der Innenwand 230 der Silikonhülle 200 verbunden.

Anders ausgedrückt, stellt die Kombination aus oberen/unteren Teil der Außenwand 220 und der Innenwand 230 der Silikonhülle 200, dem Innengrat 215a/b, dem Außengrat 214a/b, der Außenwand 211a/211b des Oberkiefer/Unterkieferabschnitts, der Innenwand 213a/213b des Oberkiefer/Unterkieferabschnitts und, im Bereich, der zur Reinigung der Seitenzähne des Benutzers vorgesehen ist, zusätzlich dem Trogboden 212a/212b den M-förmigen Querschnitt bereit, der eine besondere Anpassungsfähigkeit des Mundstücks an das Gebiss des Benutzers ermöglicht, wie insbesondere unten mit Bezug auf Fig. 4a-c beschrieben werden wird.

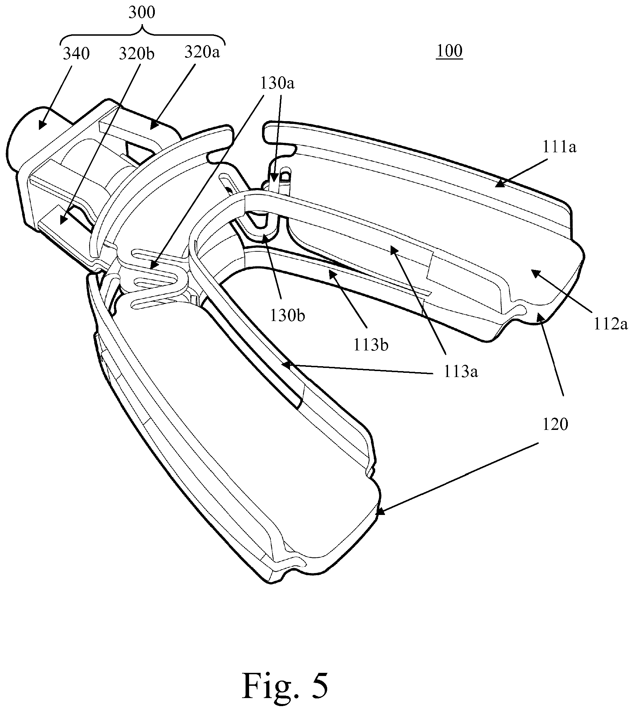

Das Mundstück 10 gemäß der vorliegenden Ausführungsform umfasst weiterhin eine Halterung 100, die nun mit zusätzlichen Bezug auf Fig. 5 beschrieben wird. Wie in Fig. 3 und 5 gezeigt, umfasst die Halterung 100 der vorliegenden Ausführungsform eine Oberkieferhalterung 110a und eine Unterkieferhalterung 110b. Ähnlich wie der Oberkieferabschnitt 210a und der Unterkieferabschnitt 210b der Silikonhülle 200, sind auch Oberkieferhalterung 110a und Unterkieferhalterung 110b im Wesentlichen symmetrisch aufgebaut und die folgende Beschreibung ist entsprechend vereinfacht.

Die Ober/Unterkieferhalterung 110a/110b umfasst einen Halterungsboden 112a/112b, der im Wesentlichen der Form der Bissfläche eines menschlichen Gebisses entspricht. Bevorzugt, wie in Fig. 3 und 5 gezeigt, umfasst die Ober/Unterkieferhalterung 110a/110b eine Außenwand 111a/111b und eine Innenwand 113a/113b, die sich jeweils in etwa in einem rechten Winkel von dem Halterungsboden 112a/112b erstrecken und durch Stützung oder Befestigung der Silikonhülle 200 dienen können. Außenwand 111a/111b und Innenwand 113a/113b laufen im Wesentlichen durchgängig am Innen/Auß0enrand des Halterungsboden 112a/112b entlang, sind im Bereich der hintersten Seitenzähne jedoch durch eine Lücke beanstandet, um während der Montage das Aufziehen der Silikonhülle 200 über die Halterung 100 zu erleichtern. In der vorliegenden Ausführungsform sind die Oberkieferhalterung 110a und die Unterkieferhalterung 110b im hinteren Endbereich 120 der hinteren Seitenzähne miteinander einstückig oder durch Verkleben oder Verschweißen miteinander verbunden.

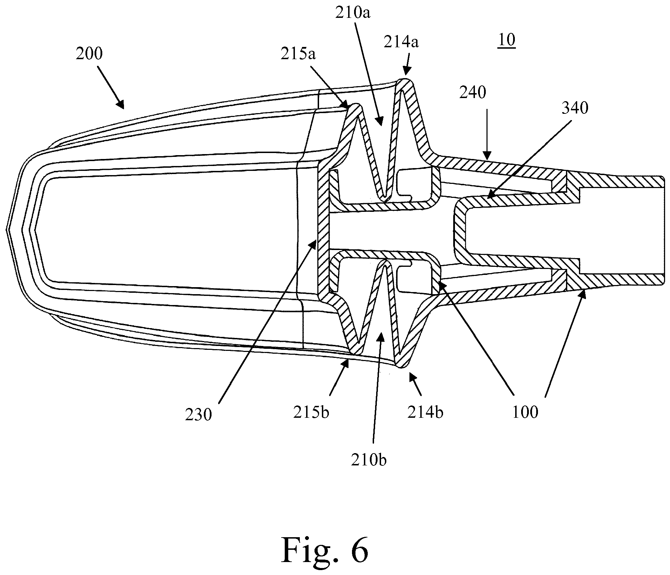

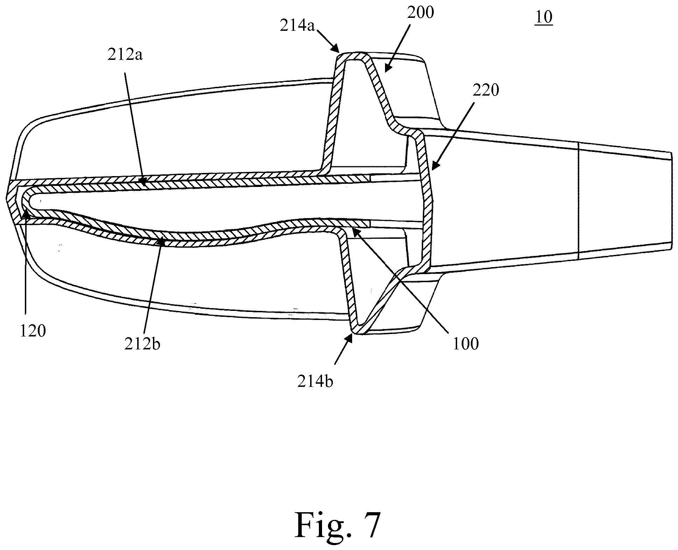

Wie in Fig. 3, 6 und 7 dargestellt ist, ist der Trogboden 212a/212b bzw. der untere Abschnitt der V-Form im Bereich der Schneidezähne (Fig. 6) mit dem Halterungsboden 112a/112b verbunden. Diese Verbindung kann durch hakenförmige oder Pilz-förmige Vorsprünge (nicht dargestellt) der Silikonhülle 200 erfolgen, die mit entsprechend vorgesehenen Löchern oder länglichen Öffnungen in der Halterung, bevorzugt dem Halterungsboden 112a/112b zusammenwirken. Eine weitere bevorzugte Verbindungsart wird durch Verkleben oder Verschweißen von Silikonhülle 200 am Trogboden 212a/212b (Fig. 3 und 7) bzw. dem unteren Abschnitt der V-Form (Fig. 6) mit dem Halterungsboden 112a/112b erreicht.

In Fig. 3 ist ebenfalls dargestellt, wie die Innenwand 230 und die Außenwand 220 der Silikonhülle jeweils über zwei Knicke oder Biegungen auf Höhe den Innenwänden 113a/113b bzw. den Außenwänden 111a/111b der Halterung 100 abgestützt sind. Diese Stützte verstärkt den unten näher beschriebenen Effekt der M-Form des Querschnitts der Silikonhülle 200. Außerdem kann die flexible Silikonhülle durch die in die Biegungen vorstehenden Halterungswände 111a/b und 113a/b leicht unter Spannung versetzt werden, was ein Verrutschen oder Reibung zwischen Halterung 100 und Silikonhülle 200 verhindern kann. Der abstützende Effekt kann alternativ oder zusätzlich zu den gezeigten Biegungen der Innenwand 230 und der Außenwand 220 der Silikonhülle auch durch Einkerbungen (nicht gezeigt) in der Silikonhülle 200 und/oder zusätzliche Stege (nicht gezeigt), die sich von der Innenwand 230 bzw. der Außenwand 220 zur Halterung 100 erstrecken, erreicht bzw. unterstützt werden.

Etwa im Bereich der Eckzähne kann die Ober/Unterkieferhalterung 110a/110b der Halterung 100 der vorliegenden Ausführungsform optional einen Schwenkfederabschnitt 130a/130b aufweisen. Dieser ist jeweils, wie abgebildet, durch Aussparungen in Halterungsboden 112a/112b und Außenwand 111a/111b (optional aber nicht dargestellt auch in der Innenwand 113a/113b) der Ober/Unterkieferhalterung 110a/110b gebildet, so dass Ober/Unterkieferhalterung 1110b jeweils durch mäandrierende und verjüngte Abschnitte in der Ebene des Halterungsbodens 112a/112b unterteilt sind. Der Schwenkfederabschnitt 130a/130b erlaubt ein gewisses Spiel der Halterung 110 in der Bissebene des Benutzers, so dass die Anpassungsfähigkeit an das spezifische Gebiss des Benutzers ermöglicht wird ohne die Schwingungsübertragung in den hinteren Bereich (hintere Seitenzähne) zu stören.

Die Ober/Unterkieferhalterung 110a/110b ist im Bereich vor den Schneidezähnen über obere und untere Federabschnitte 320a, 320b miteinander verbunden sind und die Federabschnitte 320a, 320b weiterhin mit einem Kopplungsabschnitt 340 verbunden, der zur Kopplung mit einem Vibrationsmotor (nicht dargestellt) angepasst ist. Kopplungsabschnitt 340 und die Federabschnitte 320a, 320b bilden zusammen den Verbindungsabschnitt 300. Die Verbindung mit dem Vibrationsmotor erfolgt bevorzugt über eine Steckverbindung. Alternative Verbindungstechniken sind jedoch ebenfalls denkbar (z.B. Schraubverbindung) und die Erfindung sollte nicht darauf beschränkt werden.

Fig. 4a-c zeigen am Beispiel eines Oberkieferabschnitts 210a schematisch, wie der M-förmige Querschnitt der Silikonhalterung 200 bei der Benutzung den Kontakt zwischen Silikonhülle und Zähnen des Benutzers fördert. Die gezeigten schematischen Querschnitte in Fig. 4a-c sind etwa Querschnitte entlang Linie "B" in Fig. 2. Andere Elemente des Mundstücks 10 wurden der Übersichtlichkeit halber weggelassen. Wie in Fig. 4a gezeigt, wird die M-Form des Querschnitts des Oberkieferabschnitts 210a durch obere Teile der Innenwand 230 und der Außenwand 220 der Silikonhülle, die Außenwand 211a und die Innenwand 213a des Oberkieferabschnitts 210a gebildet. Die Punkte an den Unteren Enden der oberen Teile der Innenwand 230 und der Außenwand 220 in Fig. 4a-c deuten an, dass diese durch Verbindung mit der Halterung (nicht dargestellt) oder eine entsprechende Gegenbewegung am Unterkieferabschnitt (nicht dargestellt) gestützt sind.

Wie in Fig. 4b und c dargestellt wird, wird durch die M-Form des Querschnitts der Silikonhülle der vorliegenden Ausführungsform eine verbesserte Anpassung an die individuelle Zahn- bzw. Gebissform des Benutzers erreicht. Nimmt der Benutzer das Mundstück vor der Benutzung in den Mund, drückt er seine Zähne 400 in einer Art Bissbewegung in den Ober- bzw. Unterkieferabschnitt der Silikonhülle, wie in Fig. 4b gezeigt. Durch die M-Form hat die untere Fläche des Ober- bzw. Unterkieferabschnitts ein gewisses Spiel und folgt, durch den senkrechten Pfeil in Fig. 4c angedeutet, der Bissbewegung des Benutzers eine gewisse Strecke, bevorzugt etwa 1 bis 4 mm. Durch den entstehenden Materialmangel im Bereich der proximalen Grate 214a und 215a der des Ober- bzw. Unterkieferabschnitts, werden diese Grate 214a, 215a nach innen in Richtung des Zahns gezogen, wie durch die horizontalen Pfeile in Fig. 4c angedeutet wird. Dieses Anpressen der Grate 214a, 215a als Reaktion auf die Bissbewegung des Benutzers verbessert den Kontakt der Silikonhülle mit dem Zahn 400 des Benutzers stark und somit kann die Reinigungswirkung einer Vibrationszahnreinigungsvorrichtung unter Verwendung eines Mundstücks gemäß der vorliegenden Erfindung deutlich erhöht werden.

Fig. 6 ist eine Querschnittsansicht durch ein Mundstück gemäß einer Ausführungsform der vorliegenden Offenbarung entlang der Schnittlinie "B" in Fig. 2. In Fig. 6 sind insbesondere die M-Form im Querschnitt im Bereich der Schneidezähne dargestellt. Wie gezeigt wird, sind Oberkiefer/Unterkieferabschnitt 210a/210b der Silikonhülle 200 durch den entsprechenden oberen/unteren Teil einer Außenwand 220 der Silikonhülle 200, den entsprechenden oberen/unteren Teil einer Innenwand 230 der Silikonhülle 200, die Außenwand sowie die Innenwand des Oberkiefer/Unterkieferabschnitt 210a/210b gebildet.

Die Federabschnitte der Halterung 100 (in Fig. 6 nicht dargestellt) sind von einem Silikonhüllenkopplungsabschnitt 240 abgedeckt, der im Bereich des Kopplungsabschnitts 340 der Halterung 100 bevorzugt bündig abschließt und an diesem befestigt ist, bevorzugt durch Verkleben oder Verschweißen oder durch hakenförmige oder Pilz-förmige Vorsprünge (nicht dargestellt) des Silikonhüllenkopplungsabschnitt 240, die mit entsprechend vorgesehenen Löchern oder länglichen Öffnungen in dem Kopplungsabschnitt 340 der Halterung 100 (nicht dargestellt) zusammenwirken.

Fig. 7 ist eine Querschnittsansicht durch ein Mundstück gemäß einer Ausführungsform der vorliegenden Offenbarung entlang der Schnittlinie "C" in Fig. 2. In Fig. 7 wird die bündige Klebeverbindung zwischen Halterung 100 im Bereich des Halterungsbodens 112a/112b und der Silikonhülle 200 dargestellt. Zudem wird die Verbindung 120 zwischen Oberkieferhalterung 110a und Unterkieferhalterung 110b gezeigt.

### Messverfahren

Die in dieser Beschreibung angegebene Shore-A-Härte wird gemäß DIN ISO 7619-1 bei 23°C (±2°C) gemessen. Bei einem Messverfahren gemäß DIN ISO 7619-1 wird ein Stahlstift mit einem definierten Gewicht von 1 Kg ± 0,1 Kg auf eine 6 mm hohe Probe (zuvor lh bei Messtemperatur gelagert) gedrückt und die Eindringtiefe des Stifts nach 15s gemessen. Der Stahlstift hat eine abgestumpfter Spitze, die Stirnfläche des Kegelstumpfs hat einen Durchmesser von 0,79 Millimetern, der Öffnungswinkel beträgt 35°. Für die Ermittlung der SHORE-A-Härtekennwerte wurde eine Skala eingeführt, die von 0 Shore (2,5 mm Eindringtiefe) bis 100 SHORE (0 mm Eindringtiefe) reicht. Die Messung wird fünfmal wiederholt und anschließend gemittelt.

### Bezugszeichenliste

- 10: Mundstück
100 Halterung
110a Oberkieferhalterung
110b Unterkieferhalterung
111a/b Außenwand der Ober/Unterkieferhalterung
112a/b Halterungsboden der Ober/Unterkieferhalterung
113a/b Innenwand der Ober/Unterkieferhalterung
120 Verbindung zwischen Ober- und Unterkieferhalterung
130a/b Schwenkfederabschnitt der Ober/Unterkieferhalterung
200 Silikonhülle
210a Oberkieferabschnitt
210b Unterkieferabschnitt
211a/b Außenwand des Ober/Unterkieferabschnitts
212a/b Trogboden des Ober/Unterkieferabschnitts
213a/b Innenwand des Ober/Unterkieferabschnitts
214a/b Außengrat des Ober/Unterkieferabschnitts
215a/b Innengrat des Ober/Unterkieferabschnitts
218a Übergang Seitenzähne zu Schneidezähnen Oberkieferabschnitt
220 Außenwand der Silikonhülle
230 Innenwand der Silikonhülle
240 Silikonhüllenkopplungsabschnitt
300 Kopplungsabschnitt
320a/b obere/untere Federabschnitte des Kopplungsabschnitts
340 Kopplungseinsteckabschnitt
- 400: Zahn eines Benutzers
- A: Schnittlinie Fig. 3
- B: Schnittlinie Fig. 6
- C: Schnittlinie Fig. 7

## Patentansprüche

1. Silikonhülle (200) für ein Mundstück einer Vibrationszahnputzvorrichtung für die gleichzeitige Reinigung mehrerer, vorzugsweise aller Zähne eines Benutzers, umfassend:
einen Oberkieferabschnitt (210a); und
einen Unterkieferabschnitt (210b), wobei
der Oberkieferabschnitt (210a) und der Unterkieferabschnitt (210b)jeweils einem Negativabdruck eines Ober- oder Unterkiefers eines menschlichen Gebisses entsprechen und jeweils während einer Benutzung der Vibrationszahnputzvorrichtung an innere und äußere Zahnflanken und, im Bereich der Seitenzähne, zusätzlich an Kauflächen des Ober- oder Unterkiefers des Benutzers angepasst sind, wobei
die Silikonhülle (200) am Ober- und Unterkieferabschnitt (210a, 210b) Reinigungsstrukturen aufweist, die angepasst sind, um die Zähne des Ober- oder Unterkiefers an den Zahnflanken und Kauflächen während des Betriebs zu berühren, und wobei
die Silikonhülle (200) in einem Querschnitt senkrecht zu den Zahnflanken entsprechenden Flächen (211a, 211b, 213a, 213b) des Ober- und Unterkieferabschnitts (210a, 210b) im Bereich des Ober- und Unterkieferabschnitts (210a, 210b) jeweils eine M-Form umfasst, wobei die inneren Flanken (211a, 211b, 212a, 212b, 213a, 213b) der M-Form jeweils den Ober- und Unterkieferabschnitt (210a, 210b) bilden und die unteren Enden der äußeren Flanken der M-Form (220, 230) des Unterkieferabschnitts (210b) an entsprechenden unteren Enden von äußeren Flanken (220, 230) der M-Form des Oberkieferabschnitts (210a) verbunden sind.

2. Silikonhülle (200) gemäß Anspruch 1, wobei
die Silikonhülle (200) einstückig ausgebildet und bevorzugt mittels Vakuumspritzguss hergestellt ist.

3. Silikonhülle (200) gemäß einem der vorstehenden Ansprüche, wobei
die Silikonhülle (200) eine Silikonzusammensetzung umfasst und optional aus dieser besteht, die eine Shore-A-Härte nach DIN ISO 7619-1 bei 23°C im Bereich von 20 bis 30 Shore-A, bevorzugt im Bereich von 22 bis 25 Shore-A aufweist; und/oder wobei
die Dicke der inneren Flanken (211a, 211b, 212a, 212b, 213a, 213b) der M-Form dem 0,5- bis 0,8-fachen der Dicke der äußeren Flanken (220, 230) der jeweiligen M-Form entspricht.

4. Silikonhülle (200) gemäß Anspruch 3, wobei die Dicke der äußeren Flanken (220, 230) 1,2 bis 2,5 mm, besonders bevorzugt 1,4 bis 1,8 mm beträgt und die Dicke der inneren Flanken (211a, 211b, 212a, 212b, 213a, 213b) 1,0 bis 2,0 mm, besonders bevorzugt 1,2 bis 1,6 mm beträgt.

5. Silikonhülle (200) gemäß einem der vorstehenden Ansprüche, wobei
die Reinigungsstrukturen Längslamellen umfassen, die sich im Ober- und Unterkieferabschnitt (210a, 210b) jeweils parallel zu der Erstreckungsrichtung der Zahnzwischenräume des Benutzers und senkrecht zur Silikonhüllenwand des Ober- und Unterkieferabschnitts (210a, 210b) erstrecken.

6. Silikonhülle (200) gemäß einem der vorstehenden Ansprüche, wobei
ein Raum zwischen den äußeren (220, 230) und inneren Flanken (211a, 211b, 213a, 213b) der M-Form des Querschnitts im Bereich des Ober- und Unterkieferabschnitts (210a, 210b) mit einem Material aufgefüllt ist.

7. Mundstück (10) für eine Vibrationszahnputzvorrichtung für die gleichzeitige Reinigung mehrerer, vorzugsweise aller Zähne eines Benutzers, umfassend:
eine Halterung (100); und
eine Silikonhülle gemäß einem der Ansprüche 1 bis 6, die die Halterung (100) im Wesentlichen vollständig umgibt und die Halterung (100) sich im Wesentlichen durch die gesamte Silikonhülle erstreckt.

8. Mundstück (10) gemäß Anspruch 7, wobei die Halterung (100) eine Oberkieferhalterung (110a) und eine Unterkieferhalterung (110b) umfasst und die Silikonhülle die Oberkieferhalterung (110a) und die Unterkieferhalterung (110b), abgesehen von einem Verbindungsabschnitt der Halterung (100) mit einem Vibrationsmotor, vollständig umgibt.

9. Mundstück (10) gemäß einem der Ansprüche 7 bis 8, wobei der mittlere Bereich (212a, 212b) des M-förmigen Querschnitts des Ober- und Unterkieferabschnitts (210a, 210b) eine Trog-Form aufweist und wobei ein Trogboden (212a, 212b) an der Halterung (100) befestigt ist.

10. Mundstück (10) gemäß einem der Ansprüche 7 bis 9, wobei die äußeren Flanken (220, 230) der M-Form an über einen zusätzlichen Steg, eine Einkerbung oder einen Knick in der äußeren Flanken (220, 230) an der Halterung (100) abgestützt sind.

11. Mundstück (10) gemäß einem der Ansprüche 7 bis 10, wobei
die Halterung (100) aus Homo- oder Copolyamid, bevorzugt lebensmittelechtem Homo- oder Copolyamid, weiterhin bevorzugt aus PA 6, PA, 6.6, PA 4.6, PA 11, PA 12, PA 1010, PA 610, Copolyamiden oder Polyamidmischungen aus diesen, und besonders bevorzugt PA 11, PA 12 Copolyamiden oder Polyamidmischungen aus diesen gefertigt ist.

12. Mundstück (10) gemäß einem der Ansprüche 8 bis 11, wobei
die Oberkieferhalterung (110a) und die Unterkieferhalterung (110b) im Bereich vor den Schneidezähnen über einen Federabschnitt (320a, 320b) miteinander verbunden sind und der Federabschnitt (320a, 320b) mit einem Kopplungsabschnitt (340) verbunden ist, der zur Kopplung mit einem Vibrationsmotor angepasst ist.

13. Vibrationszahnputzvorrichtung für die gleichzeitige Reinigung mehrerer, vorzugsweise aller Zähne eines Benutzers, umfassend:
ein Mundstück (10) gemäß einem der Ansprüche 7 bis 12; und
einen Vibrationsmotor, der lösbar mit dem Mundstück (10) verbunden ist.

14. Verfahren zur Herstellung einer Silikonhülle (200), gemäß einem der Ansprüche 1 bis 6, für eine Vibrationszahnputzvorrichtung für die gleichzeitige Reinigung mehrerer, vorzugsweise aller Zähne eines Benutzers, umfassend:
Bereitstellen einer Negativform für den Vakuumspritzguss, und
Fertigen einer Silikonhülle (200) mittels Vakuumspritzguss unter Verwendung der Negativform, wobei
die Silikonhülle (200) einen Oberkieferabschnitt (210a) und einen Unterkieferabschnitt (210b) aufweist, die jeweils einem Negativabdruck eines Ober- oder Unterkiefers eines menschlichen Gebisses entsprechen und jeweils während einer Benutzung des Mundstücks (10) an innere und äußere Zahnflanken und, im Bereich der Seitenzähne, an Kauflächen des Ober- oder Unterkiefers des Benutzers angepasst sind, und wobei
die Silikonhülle (200) am Ober- und Unterkieferabschnitt (210a, 210b) Reinigungsstrukturen aufweist, die die Zähne des Ober- oder Unterkiefers an den Zahnflanken und Kauflächen berühren,
wobei die Silikonhülle (200) in einem Querschnitt senkrecht zu den Zahnflanken entsprechenden Flächen (211a, 211b, 213a, 213b) des Ober- und Unterkieferabschnitts (210a, 210b) im Bereich des Ober- und Unterkieferabschnitts (210a, 210b) jeweils eine M-Form umfasst, wobei die inneren Flanken (211a, 211b, 212a, 212b, 213a, 213b) der M-Form jeweils den Ober- und Unterkieferabschnitt (210a, 210b) bilden und die unteren Enden der äußeren Flanken der M-Form (220, 230) des Unterkieferabschnitts (210b) an entsprechenden unteren Enden von äußeren Flanken (220, 230) der M-Form des Oberkieferabschnitts (210a) befestigt sind.

15. Verfahren zur Herstellung eines Mundstücks (10) für eine Vibrationszahnputzvorrichtung für die gleichzeitige Reinigung mehrerer, vorzugsweise aller Zähne eines Benutzers, umfassend:
ein Verfahren gemäß Anspruch 14,
Bereitstellen einer Halterung (100); und
Ziehen der Silikonhülle (200), die durch das Verfahren gemäß Anspruch 14 erhalten wurde, über die Halterung (100).

## Claims

1. Silicone casing (200) for a mouthpiece of a vibratory tooth cleaning device for the simultaneous cleaning of several, preferably all, of a user's teeth, comprising:
an upper jaw section (210a); and
a lower jaw section (210b), wherein
the upper jaw section (210a) and the lower jaw section (210b) each correspond to a negative impression of an upper or lower jaw of a human dentition and are each adapted to inner and outer tooth flanks and, in the region of the posterior teeth, additionally to occlusal surfaces of the upper or lower jaw of the user during use of the vibratory tooth cleaning device, wherein
the silicone casing (200) on the upper and lower jaw sections (210a, 210b) has cleaning structures adapted to contact the teeth of the upper or lower jaw at the tooth flanks and occlusal surfaces during operation, and wherein
the silicone casing (200), in a cross-section perpendicular to surfaces (211a, 211b, 213a, 213b) of the upper and lower jaw sections (210a, 210b) corresponding to the tooth flanks, in the region of the upper and lower jaw sections (210a, 210b) each comprises an M-shape, wherein the inner flanks (211a, 211b, 212a, 212b, 213a, 213b) of the M-shape form the upper and lower jaw sections (210a, 210b), respectively, and the lower ends of the outer flanks of the M-shape (220, 230) of the lower jaw section (210b) are connected to corresponding lower ends of outer flanks (220, 230) of the M-shape of the upper jaw section (210a).

2. Silicone casing (200) according to claim 1, wherein
the silicone casing (200) is formed in one piece and is preferably manufactured by vacuum injection molding.

3. Silicone casing (200) according to any one of the above claims, wherein
the silicone casing (200) comprises and optionally consists of a silicone composition having a Shore A hardness according to DIN ISO 7619-1 at 23°C in the range of 20 to 30 Shore A, preferably in the range of 22 to 25 Shore A; and/or wherein
the thickness of the inner flanks (211a, 211b, 212a, 212b, 213a, 213b) of the M-shape is 0.5 to 0.8 times the thickness of the outer flanks (220, 230) of the respective M-shape.

4. Silicone casing (200) according to claim 3, wherein the thickness of the outer flanks (220, 230) is 1.2 to 2.5 mm, particularly preferable 1.4 to 1.8 mm, and the thickness of the inner flanks (211a, 211b, 212a, 212b, 213a, 213b) is 1.0 to 2.0 mm, particularly preferable 1.2 to 1.6 mm.

5. Silicone casing (200) according to any one of the above claims, wherein
the cleaning structures comprise longitudinal lamellae extending in the upper and lower jaw sections (210a, 210b) respectively parallel to the direction of extension of the interdental spaces of the user and perpendicular to the silicone casing wall of the upper and lower jaw sections (210a, 210b).

6. Silicone casing (200) according to any one of the above claims, wherein
a space between the outer flanks (220, 230) and inner flanks (211a, 211b, 213a, 213b) of the M-shape of the cross section in the region of the upper and lower jaw sections (210a, 210b) is filled with a material.

7. A mouthpiece (10) for a vibratory tooth cleaning device for the simultaneous cleaning of several, preferably all teeth of a user, comprising:
a holder (100); and
a silicone casing according to any one of claims 1 to 6, which substantially completely surrounds the holder (100) and the holder (100) extends substantially through the entire silicone casing.

8. Mouthpiece (10) according to claim 7, wherein the holder (100) comprises an upper jaw holder (110a) and a lower jaw holder (110b), and the silicone casing completely surrounds the upper jaw holder (110a) and the lower jaw holder (110b) except for a connecting portion of the holder (100) with a vibration motor.

9. Mouthpiece (10) according to any one of claims 7 to 8, wherein the central portion (212a, 212b) of the M-shaped cross section of the upper and lower jaw sections (210a, 210b) has a trough shape, and wherein a trough bottom (212a, 212b) is attached to the holder (100).

10. Mouthpiece (10) according to any one of claims 7 to 9, wherein the outer flanks (220, 230) of the M-shape are supported on the holder (100) via an additional web, a notch or a bend in the outer flanks (220, 230).

11. Mouthpiece (10) according to any one of claims 7 to 10, wherein
the holder (100) is made of homo- or copolyamide, preferably food grade homo- or copolyamide, further preferably of PA 6, PA 6.6, PA 4.6, PA 11, PA 12, PA 1010, PA 610, copolyamides, or polyamide mixtures of these, and especially preferably PA 11, PA 12, copolyamides, or polyamide mixtures of these.

12. Mouthpiece (10) according to any one of claims 8 to 11, wherein
the upper jaw holder (110a) and the lower jaw holder (110b) are connected to each other in the region in front of the incisors via a spring section (320a, 320b) and the spring section (320a, 320b) is connected to a coupling section (340) adapted for coupling to a vibration motor.

13. A vibratory tooth cleaning device for simultaneously cleaning several, preferably all, of a user's teeth, comprising:
a mouthpiece (10) according to any one of claims 7 to 12; and
a vibration motor which is detachably connected to the mouthpiece (10).

14. A method of manufacturing a silicone casing (200) according to one of claim 1 to 6 for a vibratory tooth cleaning device for the simultaneous cleaning of several, preferably all, of a user's teeth, comprising:
providing a negative mold for vacuum injection molding, and
manufacturing a silicone casing (200) by vacuum injection molding using the negative mold, wherein
the silicone casing (200) comprises an upper jaw section (210a) and a lower jaw section (210b), each corresponding to a negative impression of an upper or lower jaw of a human dentition and each being adapted to inner and outer tooth flanks and, in the region of the posterior teeth, to occlusal surfaces of the upper or lower jaw of the user during use of the mouthpiece (10), and wherein
the silicone casing (200) has cleaning structures on the upper and lower jaw sections (210a, 210b) that contact the teeth of the upper or lower jaw at the tooth flanks and occlusal surfaces,
wherein the silicone casing (200), in a cross-section perpendicular to surfaces (211a, 211b, 213a, 213b) of the upper and lower jaw sections (210a, 210b) corresponding to the tooth flanks, in the region of the upper and lower jaw sections (210a, 210b) each comprises an M-shape, wherein the inner flanks (211a, 211b, 212a, 212b, 213a, 213b) of the M-shape form the upper and lower jaw sections (210a, 210b), respectively, and the lower ends of the outer flanks of the M-shape (220, 230) of the lower jaw section (210b) are fixed to corresponding lower ends of outer flanks (220, 230) of the M-shape of the upper jaw section (210a).

15. Method of manufacturing a mouthpiece (10) for a vibratory tooth cleaning device for simultaneously cleaning a plurality of, preferably all, of a user's teeth, comprising:
a method according to claim 14,
providing a holder (100); and
pulling the silicone casing (200) obtained by the method according to claim 14 over the holder (100).

## Revendications

1. Gaine en silicone (200) pour un embout d'un dispositif vibrant de nettoyage des dents, destiné au nettoyage simultané de plusieurs, de préférences de toutes les dents d'un utilisateur, comprenant :
une partie pour la mâchoire supérieure (210a) ; et
une partie pour la mâchoire inférieure (210b),
la partie pour la mâchoire supérieure (210a) et la partie pour la mâchoire inférieure (210b) correspondant chacune à une empreinte négative d'une mâchoire supérieure et inférieure d'une denture humaine et étant adaptées chacune pendant une utilisation du dispositif vibrant de nettoyage des dents à des flancs internes et externes de dents et dans la zone des dents postérieures, étant adaptées en supplément à des surfaces de masticage de la mâchoire supérieure et inférieure de l'utilisateur,
la gaine en silicone (200) comportant sur la partie pour la mâchoire supérieure et sur la partie pour la mâchoire inférieure (210a, 210b) des structures de nettoyage qui sont adaptées pour être en contact avec les dents de la mâchoire supérieure et de la mâchoire inférieure sur les flancs des dents et avec les surfaces de masticage en cours de fonctionnement, et
dans une section transversale, à la perpendiculaire de surfaces (211a, 211b, 213a, 213b) correspondant aux flancs des dents de la partie pour la mâchoire supérieure et de la partie pour la mâchoire inférieure (210a, 210b), la gaine en silicone (200) présentant dans la zone de la partie pour la mâchoire supérieure et de la partie pour la mâchoire inférieure (210a, 210b) respectivement la forme d'un M, les flancs internes (211a, 211b, 212a, 212b, 213a, 213b) de la forme de M formant respectivement la partie pour la mâchoire supérieure et la partie pour la mâchoire inférieure (210a, 210b) et les extrémités inférieures des flancs externes de la forme de M (220, 230) de la partie pour la mâchoire inférieure (210b) étant reliées à des extrémités inférieures correspondantes de flancs externes (220, 230) de la forme de M de la partie pour la mâchoire supérieure (210a).

2. Gaine en silicone (200) selon la revendication 1,
la gaine en silicone (200) étant conçue en monobloc et étant fabriquée de préférence par moulage par injection sous vide.

3. Gaine en silicone (200) selon l'une quelconque des revendications précédentes,
la gaine en silicone (200) comprenant une composition siliconée et étant en option constituée de celle-ci, qui fait preuve d'une dureté Shore A selon DIN ISO 7619-1 à 23°C de l'ordre de 20 à 30 Shore A, de préférence de l'ordre de 22 à 25 Shore A ; et/ou
l'épaisseur des flancs internes (211a, 211b, 212a, 212b, 213a, 213b) de la forme de M correspondant à de 0,5 à 0,8 fois l'épaisseur des flancs externes (220, 230) de la forme de M respective.

4. Gaine en silicone (200) selon la revendication 3, l'épaisseur des flancs externes (220, 230) étant de 1,2 à 2,5 mm, de manière particulièrement préférentielle, de 1,4 à 1,8 mm et l'épaisseur des flancs internes (211a, 211b, 212a, 212b, 213a, 213b) étant de 1,0 à 2,0 mm, de manière particulièrement préférentielle, de 1,2 à 1,6 mm.

5. Gaine en silicone (200) selon l'une quelconque des revendications précédentes,
les structures de nettoyage comprenant des lamelles longitudinales, qui dans la partie pour la mâchoire supérieure et dans la partie pour la mâchoire inférieure (210a, 210b) s'étendent chacune à la parallèle de la direction d'extension des espaces interdentaires de l'utilisateur et à la perpendiculaire de la paroi de la gaine en silicone de la partie pour la mâchoire supérieure et de la partie pour la mâchoire inférieure (210a, 210b).

6. Gaine en silicone (200) selon l'une quelconque des revendications précédentes,
un espace entre les flancs externes (220, 230) et les flancs internes (211a, 211b, 213a, 213b) de la forme de M de la section transversale dans la zone de la partie pour la mâchoire supérieure et de la partie pour la mâchoire inférieure (210a, 210b) étant rempli d'une matière.

7. Embout (10) pour un dispositif vibrant de nettoyage des dents, destiné au nettoyage simultané de plusieurs, de préférences de toutes les dents d'un utilisateur, comprenant :
un support (100) ; et
une gaine en silicone selon l'une quelconque des revendications 1 à 6, qui entoure le support (100) sensiblement dans sa totalité et le support (100) s'étendant sensiblement à travers toutes la gaine en silicone.

8. Embout (10) selon la revendication 7, le support (100) comprenant un support de mâchoire supérieure (110a) et un support de mâchoire inférieure (110b) et la gaine en silicone entourant totalement le support de mâchoire supérieure (110a) et le support de mâchoire inférieure (110b), à l'exception d'une partie de liaison du support (100) avec un moteur vibrant.

9. Embout (10) selon l'une quelconque des revendications 7 à 8, la zone centrale (212a, 212b) de la section transversale en forme de M de la partie pour la mâchoire supérieure et de la partie pour la mâchoire inférieure (210a, 210b) présentant la forme d'une auge et un fond inférieur (212a, 212b) de l'auge étant fixé sur le support (100).

10. Embout (10) selon l'une quelconque des revendications 7 à 9, les flancs externes (220, 230) de la forme de M étant soutenus par l'intermédiaire d'une barrette, d'une encoche ou d'un coude supplémentaire dans les flancs extérieurs (220, 230) sur le support (100).

11. Embout (10) selon l'une quelconque des revendications 7 à 10,
le support (100) étant fabriqué en homopolyamide ou en copolyamide, de préférence en homopolyamide ou en copolyamide alimentaire, de manière préférentielle par ailleurs en PA 6, en PA 6.6, en PA 4.6, en PA 11, en PA 12, en PA 1010, en PA 610, en copolyamides ou en mélanges de polyamides de ceux-ci, et de manière particulièrement préférentielle en PA 11, en PA 12, en copolyamides ou en mélanges de polyamides de ceux-ci.

12. Embout (10) selon l'une quelconque des revendications 8 à 11,
dans la zone antérieure aux incisives, le support de mâchoire supérieure (110a) et le support de mâchoire inférieure (110b) étant reliés l'un à l'autre par l'intermédiaire d'une partie à ressort (320a, 320b) et la partie à ressort (320a, 320b) étant reliée avec une partie d'accouplement (340) qui est adaptée pour être accouplée avec un moteur vibrant.

13. Dispositif vibrant de nettoyage des dents, destiné au nettoyage simultané de plusieurs, de préférences de toutes les dents d'un utilisateur, comprenant :
un embout (10) selon l'une quelconque des revendications 7 à 12 ; et
un moteur vibrant, qui est relié de manière amovible avec l'embout (10).

14. Procédé, destiné à fabriquer une gaine en silicone (200) selon l'une quelconque des revendications 1 à 6, pour un dispositif vibrant de nettoyage des dents, destiné au nettoyage simultané de plusieurs, de préférences de toutes les dents d'un utilisateur, comprenant :
la mise à disposition d'une forme négative pour le moulage par injection sous vide, et
la fabrication d'une gaine en silicone (200) par moulage par injection sous vide, en utilisant la forme négative,
la gaine en silicone (200) comportant une partie pour la mâchoire supérieure (210a) et une partie pour la mâchoire inférieure (210b), correspondant chacune à une empreinte négative d'une mâchoire supérieure et inférieure d'une denture humaine et étant adaptées chacune pendant une utilisation de l'embout (10) à des flancs internes et externes de dents et dans la zone des dents postérieures, étant adaptées en supplément à des surfaces de masticage de la mâchoire supérieure et inférieure de l'utilisateur, et
la gaine en silicone (200) comportant sur la partie pour la mâchoire supérieure et sur la partie pour la mâchoire inférieure (210a, 210b) des structures de nettoyage qui sont en contact avec les dents de la mâchoire supérieure et de la mâchoire inférieure sur les flancs des dents et avec les surfaces de masticage,
dans une section transversale, à la perpendiculaire de surfaces (211a, 211b, 213a, 213b) correspondant aux flancs des dents de la partie pour la mâchoire supérieure et de la partie pour la mâchoire inférieure (210a, 210b), la gaine en silicone (200) présentant dans la zone de la partie pour la mâchoire supérieure et de la partie pour la mâchoire inférieure (210a, 210b) respectivement la forme d'un M, les flancs internes (211a, 211b, 212a, 212b, 213a, 213b) de la forme de M formant respectivement la partie pour la mâchoire supérieure et la partie pour la mâchoire inférieure (210a, 210b) et les extrémités inférieures des flancs externes de la forme de M (220, 230) de la partie pour la mâchoire inférieure (210b) étant reliées à des extrémités inférieures correspondantes de flancs externes (220, 230) de la forme de M de la partie pour la mâchoire supérieure (210a).

15. Procédé, destiné à fabriquer un embout (10) pour un dispositif vibrant de nettoyage des dents, destiné au nettoyage simultané de plusieurs, de préférences de toutes les dents d'un utilisateur, comprenant :
un procédé selon la revendication 14,
la mise à disposition d'un support (100) ; et
l'enrobage du support (100) avec la gaine en silicone (200), qui a été obtenue grâce au procédé selon la revendication 14.
